# EUROPÄISCHE PATENTSCHRIFT

(11) **EP 2 556 127 B1**
(45) Veröffentlichungstag und Bekanntmachung des Hinweises auf die Patenterteilung: **14.03.2018**
(21) Anmeldenummer: 11713207.6
(22) Anmeldetag: 24.03.2011
(51) Int. Cl.: C09J 7/02, D21H 27/00, D21H 19/36

(54) **BESCHRIFTBARES HAFTKLEBRIGES PRODUKT**
PRESSURE-SENSITIVE ADHESIVE PRODUCT THAT CAN BE WRITTEN UPON
PRODUIT AUTOADHÉSIF INSCRIPTIBLE

(30) Priorität: 09.04.2010 DE 102010003793
(43) Veröffentlichungstag der Anmeldung: 13.02.2013
(73) Patentinhaber: tesa SE, 22848 Norderstedt (DE)
(72) Erfinder: BIR, Gerhard, 22117 Hamburg (DE); SCHWARZ, Imke, 20259 Hamburg (DE); WEHRMANN, Peter, 79211 Denzlingen (DE); JUNGHANS, Monika, 22457 Hamburg (DE); IBRAHIMI, Roya, 22529 Hamburg (DE)
(86) Internationale Anmeldenummer: PCT/EP2011/054515
(87) Internationale Veröffentlichungsnummer: WO 2011/124476

(56) Entgegenhaltungen:
- EP-A1- 2 006 340
- DE-A1- 3 521 532
- US-B1- 6 251 512
- Anonymous: "Mastersizer 2000 Integrated systems for particle sizing", , 1 January 2005 (2005-01-01), pages 1-12, XP055299732, Retrieved from the Internet: URL:https://www.google.de/url?sa=t&rct=j&q =&esrc=s&source=web&cd=4&ved=0ahUKEwiPj-iy 2KvUAhULU1AKHeX8C6MQFghAMAM&url=http%3A%2F %2Fpmbrc.org%2Findex.php%2Fdownload_file%2 Fview%2F189%2F&usg=AFQjCNEUWDpicZvQ7K_UR8W puTuJuITYwQ&cad=rja [retrieved on 2016-09-05]

## Beschreibung

Die vorliegende Erfindung betrifft beschriftbare haftklebrige Produkte umfassend einen Träger mit einer auf der Vorderseite des Trägers angeordneten Haftklebmassenschicht und einer auf der Rückseite des Trägers angeordneten Releaseschicht, die Silicagelpartikel und Stärke sowie ein Bindemittel und optional weitere Additive umfasst, wobei die Silicagelpartikel eine durchschnittliche Partikelgröße von 3 - 10 µm aufweisen.

### Stand der Technik

Beschriftbare Trägermaterialien wie zum Beispiel beschriftbare transparente Filme sind bekannt. Ihre Beschriftbarkeit ist in der Regel entweder auf lösungsmittelbasierte Systeme oder auf wasserbasierte Systeme ausgerichtet. Ebenfalls bekannt sind Materialien, die sowohl lösungsmittel- als auch wasserbasierte Systeme in gewissem Maße tolerieren. Solche Produkte stellen jedoch in ihrer Beschriftbarkeit hinsichtlich des erzielbaren Schriftbildes einen Kompromiss dar und sind insbesondere hinsichtlich einer Beschriftbarkeit mit Bleistiften bei gleichzeitiger guter Beschriftbarkeit mit wässrigen und lösungsmittelhaltigen Medien problematisch.
Um eine möglichst vielseitige Beschriftbarkeit von Gegenständen zu gewährleisten, schlägt der Stand der Technik verschiedene Beschichtungszusammensetzungen und bestimmte Trägermaterialien vor. Aus dem Stand der Technik bekannte Beschichtungszusammensetzungen sind jedoch bei erhöhter Wärme und/oder Luftfeuchtigkeit nicht alterungsbeständig. Bestimmte für beschriftbare Produkte vorgeschlagene Trägermaterialien wiederum bestehen häufig aus Materialien, die aus Umweltgesichtspunkten nachteilig sind.
DE 35 21 532 A1 beschreibt ein beschriftbares Polyolefin-Klebeband aus einer transparenten Polyolefin-Trägerfolie und einer darauf einseitig aufgebrachten Klebstoff-Schicht, wobei die Trägerfolie auf ihrer anderen Seite eine ebenfalls transparente und im Vergleich zur Trägerfolie dünne Außenschicht aufweist, die im Wesentlichen aus einem Polyolefin als Hauptkomponente und 10 bis 40 Gew.-% eines anorganischen Weißpigments besteht. Die mittlere Teilchengröße dieses Weißpigments ist dabei größer als die Dicke der Außenschicht. Die mittlere Teilchengröße des Weißpigments liegt im Bereich von 1 bis 5 µm und die Dicke der Außenschicht im Bereich von 0,5 bis 1,5 µm, und der Quotient aus dem Wert der mittleren Teilchengröße des Weißpigments und dem Wert der Dicke der Außenschicht ist gleich oder kleiner als 3,5. Die Außenschicht ist für eine Beschriftung vorgesehen.

US 6,251,512 B1 schlägt beschriftbare Klebeartikel umfassend einen Träger, eine auf diesen Träger aufgetragene wasserabsorbierende Schicht sowie eine zusätzliche Trennschicht vor, die auf die wasserabsorbierende Schicht aufgetragen wird. Herkömmliche Trennschichten haben jedoch unweigerliche Einflüsse auf die universelle Beschriftbarkeit der genannten Gegenstände, was zum Teil mit der Oberflächenenergie solcher leicht trennender Schichten erklärt werden kann.
Um die Beschriftbarkeit leicht trennender Schichten zu verbessern, besteht insofern auf dem Gebiet der haftklebrigen Produkte weiterer Optimierungsbedarf.

Die vorliegende Erfindung stellt sich somit der Aufgabe, die genannten Probleme zu lösen. Insbesondere liegt der vorliegenden Erfindung das Problem zugrunde, haftklebrige Produkte bereitzustellen, die sich gegenüber dem Stand der Technik hinsichtlich einer universellen Beschriftbarkeit durch verbesserte Eigenschaften unterscheiden und gleichzeitig ein optimiertes Trennverhalten, zum Beispiel beim Abrollen entsprechender Produkte von einer archimedisch aufgewickelten Spirale, zeigen.

### Beschreibung

Die vorliegende Erfindung löst die genannten Probleme durch das haftklebrige Produkt gemäß Hauptanspruch, das eine besondere Releaseschicht enthält. So betrifft die vorliegende Erfindung beschriftbare haftklebrige Produkte umfassend einen Träger mit einer auf der Vorderseite des Trägers angeordneten Haftklebmassenschicht und einer auf der Rückseite des Trägers angeordneten Releaseschicht, die Silicagelpartikel und Stärke sowie ein Bindemittel und optional weitere Additive umfasst, wobei die Silicagelpartikel eine durchschnittliche Partikelgröße, bestimmt nach Messmethode A von 3 - 10 µm aufweisen. Beschriftbar im Sinne der vorliegenden Erfindung umfasst sowohl eine Beschriftbarkeit mit entsprechenden Schreibgeräten als auch eine Bedruckbarkeit mit z.B. Tintenstrahldruckern.
Der Träger des erfindungsgemäßen haftklebrigen Produktes kann aus allen geeigneten Trägern wie zum Beispiel Polymerfolienträgern, Polymerschaumträgern, Papier- oder Gewebeträgern oder Nonwovens, d.h. Vliesträgern, ausgewählt werden. Besonders bevorzugt werden als Träger Polyolefinfolien auf Basis von Polyethylen (PE), zweifach verstrecktem Polypropylen (BOPP), einfach verstrecktem Polypropylen (MOPP) oder eines Ethylen-Propylen-Dien-Mischpolymerisates (EPDM) ausgewählt, wobei Polyolefinfolien auf Basis von BOPP besonders bevorzugt sind. Dabei können klassische Methoden wie chemische Primer-Behandlung, Flammvorbehandlung oder CoronaBehandlung der Folienoberflächen zur Verbundfestigkeit des späteren Schichtaufbaus beitragen.

Die Haftklebmassenschicht des erfindungsgemäßen Produktes besteht aus einer Haftklebmasse, die ausgewählt sein kann aus der Gruppe bestehend aus Haftklebmassen auf Polyacrylatbasis, Haftklebmassen auf Polyvinylacetat- und Polyethylenvinylacetatbasis, Naturkautschukklebmassen und Synthesekautschukklebmassen, wobei Haftklebmassen auf Polyacrylatbasis bevorzugt sind. Die Haftklebmasse erfindungsgemäßer haftklebriger Produkte kann Additive enthalten. Bevorzugt enthält die Haftklebmasse bis zu 5 Gew.-% eines Füllstoffes, bevorzugt Titandioxid.

Die Releaseschicht der erfindungsgemäßen Produkte ist die trennwirksame Schicht innerhalb des Produktaufbaus und weist insofern zusätzlich zu Silicagelpartikeln und Stärke sowie einem Bindemittel und optional weiteren Additiven wenigstens einen trennwirksamen Bestandteil, auch Trennmittel genannt, auf. Geeignete Trennmittel umfassen tensidische Releasesysteme auf Basis langkettiger Alkylgruppen wie Stearylsulfosuccinate oder Stearylsulfosuccinamate, aber auch Polymere, die ausgewählt sein können aus der Gruppe bestehend aus Polyvinylstearylcarbamaten, Polyethyleniminstearylcarbamiden, Chrom-Komplexen von C₁₄ - C₂₈ Fettsäuren und Stearyl-Copolymeren, wie zum Beispiel in DE 28 45 541 A beschrieben. Ebenfalls geeignet sind Trennmittel auf Basis von Acrylpolymeren mit perfluorierten Alkylgruppen, Silikone oder Fluorsilikonverbindungen, z.B. auf Basis von Poly(dimethyl-Siloxanen). Besonders bevorzugt umfasst die Releaseschicht ein Polymer auf Silikonbasis. Besonders bevorzugte Beispiele solcher trennwirksamen Polymere auf Silikonbasis umfassen polyurethan- und/oder polyharnstoffmodifizierte Silikone, bevorzugt Organopolysiloxan/Polyharnstoff/Polyurethan-Blockcopolymere, besonders bevorzugt solche wie in Beispiel 19 von EP 1 336 683 B1 beschrieben, ganz besonders bevorzugt anionisch stabilisierte polyurethan- und polyharnstoffmodifizierte Silikone mit einem Silikon-Gewichtsanteil von 70% und einer Säurezahl von 30 mg KOH/g. Der Einsatz polyurethan- und/oder harnstoffmodifizierter Silikone bedingt den Effekt, dass die erfindungsgemäßen Produkte bei optimierter Alterungsbeständigkeit und universeller Beschriftbarkeit ein optimiertes Trennverhalten aufweisen. In einer bevorzugten Ausführungsform der Erfindung umfasst die Releaseschicht 10 - 20 Gew.-%, besonders bevorzugt 13 - 18 Gew.-% des trennwirksamen Bestandteils.

Die Silicagelpartikel in der Releaseschicht erfindungsgemäßer Produkte sind keinen besonderen Einschränkungen unterworfen, sofern sie eine durchschnittliche Partikelgröße (bestimmt nach Meßmethode A) von 3 - 10 µm, bevorzugt 3,5 - 7 µm, noch bevorzugter 4 - 5 µm aufweisen. Bewegt sich die durchschnittliche Partikelgröße innerhalb der genannten Bereiche, ergibt sich eine hervorragende Beschriftbarkeit der erfindungsgemäßen Produkte mit verschiedenen Systemen wie wasserbasierten und lösungsmittelbasierten Systemen sowie Bleistiften und anderen Schreib- bzw. Druckutensilien bei gleichzeitig verbessertem Trennverhalten. Bevorzugt weisen die Silicagelpartikel eine Partikelgrößenverteilung (gemessen nach Messmethode A) auf, für die D(0.05) Werte von 1,50 - 2,50 µm, D(0.10) Werte von 2,00 - 3,00 µm, D(0.50) Werte von 3,80 bis 5,20 µm, D(0.90) Werte von 6,50 -7,50 µm und D(0.98) Werte von 8,00 - 10,00 µm aufweist.

Geeignete Silicagelpartikel können zum Beispiel unter dem Handelsnamen SYLOID® von der Firma GRACE Davison bezogen werden. In einer bevorzugten Ausführungsform der Erfindung umfasst die Releaseschicht der erfindungsgemäßen Produkte 3 - 30 Gew.-% Silicagelpartikel.
Als Stärke kann in der Releaseschicht erfindungsgemäßer Produkte handelsübliche Stärke verwendet werden. Bevorzugt sind feinteilige Stärken wie Reis-, Tapioka- oder Amaranthstärke. In einer besonderen Ausführungsform der Erfindung umfasst die Releaseschicht der erfindungsgemäßen Produkte 5 - 50 Gew.-% Stärke, bevorzugt 20 - 40 Gew.-%, besonders bevorzugt 25- 35 Gew.-%.

Als Bindemittel in der Releaseschicht der erfindungsgemäßen Produkte können Polyacrylate, Styrolacrylatcopolymere, Polyvinylacetat, Polyvinylamid, Polyvinylalkohol, Polyvinylpyrrolidon oder Polyurethane eingesetzt werden. Bevorzugte Bindemittel sind Polyacrylate und Polyurethane. Besonders bevorzugt umfasst das Bindemittel ein Polymer auf Polyurethanbasis, noch bevorzugter aliphatische Polyurethane, die vergilbungsresistent sind. In einer Ausführungsform der Erfindung umfasst die Releaseschicht der erfindungsgemäßen Produkte 25 - 70 Gew.-%, besonders bevorzugt 30 - 65 Gew.-%, noch bevorzugter 50 - 60 Gew.-% Bindemittel.

Die optional in der Releaseschicht erfindungsgemäßer Produkte enthaltenen weiteren Additive umfassen Verdickungsmittel, Schaumregulierungsmittel (Entschäumer), Emulgatoren, Vernetzungsmittel und polare organische Additive, die geeignet sind, die Gesamtpolarität der Releaseschicht zu modifizieren. Besonders bevorzugt werden die weiteren Additive ausgewählt aus der Gruppe umfassend Verdickungsmittel aus der Gruppe der Assoziativverdicker auf Polyurethanbasis, Vernetzungsmittel wie hydrophile Isocyanate, Emulgatoren wie Polyether und Schaumregulierungsmittel. In einer bevorzugten Ausführungsform der Erfindung umfasst die Releaseschicht der erfindungsgemäßen Produkte bis zu 30 Gew.-% eines oder mehrerer der genannten Additive.

In einer besonders bevorzugten Ausführungsform der Erfindung umfasst die Releaseschicht der erfindungsgemäßen Produkte 3 - 30 Gew.-% Silicagelpartikel, 5 - 50 Gew.-% Stärke, 25 - 70 Gew.-% Bindemittel, 10 - 20 Gew.-% eines Polymers auf Silikonbasis und bis zu 30 Gew.-% eines oder mehrerer der genannten Additive. Überraschender Weise hat sich gezeigt, dass erfindungsgemäße Produkte mit einer Releaseschicht der genannten Zusammensetzung nicht nur eine verbesserte Alterungsbeständigkeit, sondern gleichzeitig eine verbesserte Beschriftbarkeit bei hervorragendem Trennverhalten aufweisen. Dabei weist das erfindungsgemäße Produkt trotz der mit einer universellen Beschriftbarkeit verbundenen ausreichenden Affinität der Oberfläche für polare Flüssigkeiten eine hohe Beständigkeit gegen manuellen Abrieb auch unter Feuchtigkeitseinwirkung durch Wasser auf.

Die Releaseschicht erfindungsgemäßer haftklebriger Produkte ist erhältlich durch das Auftragen einer ersten Zusammensetzung auf den Träger, wobei die erste Zusammensetzung Silicagelpartikel mit einer durchschnittlichen Partikelgröße von 3 - 10 µm bevorzugt 3,5 - 7 µm, noch bevorzugter 4 - 5 µm, und Stärke sowie ein Bindemittel und optional weitere Additive umfasst, und anschließendem Auftragen einer zweiten, trennwirksamen Zusammensetzung hierauf, wobei die trennwirksame Zusammensetzung wenigstens einen trennwirksamen Bestandteil umfasst.

Das Auftragen der ersten Zusammensetzung auf den Träger erfolgt beispielsweise durch gängige Druck-, Streich- und Rakelverfahren. Das Auftragen der trennwirksamen Zusammensetzung kann durch Flexodruck- oder Rakelverfahren vorgenommen werden. Bevorzugt werden die erste Zusammensetzung und die zweite, trennwirksame Zusammensetzung in einem inline-Tandemstreichprozess aufgetragen, bei dem passende Rakel wie das Modell X26 (Horst Sprenger GmbH) für die erste Zusammensetzung und für die zweite Zusammensetzung ein Glattrakel (Horst Sprenger GmbH) zum Einsatz kommen. Besonders bevorzugt liegt die erste und die zweite Zusammensetzung beim Auftragen in einem der oben genannten Verfahren jeweils in Form einer wässrigen Dispersion vor, wobei die erste Zusammensetzung einen bevorzugten Feststoffgehalt von 5 bis 30 %, bevorzugt 10 bis 20%, noch bevorzugter 13 bis 17% und die zweite Zusammensetzung einen bevorzugten Feststoffgehalt von bis zu 30 %, bevorzugt bis 20%, noch bevorzugter von 8 bis 12% beim Auftragen aufweist.

Je nach Trocknungsgrad der ersten Zusammensetzung nach dem Auftragen auf den Träger findet während und nach dem Auftragen der zweiten, trennwirksamen Zusammensetzung eine Durchmischung der Bestandteile der ersten Zusammensetzung mit den Bestandteilen der zweiten, trennwirksamen Zusammensetzung statt. Es ist jedoch auch denkbar, dass es zu keiner Durchmischung kommt, sodass die Releaseschicht der erfindungsgemäßen Produkte einen zweischichtigen Aufbau aufweist. Bevorzugt wird die zweite, trennwirksame Zusammensetzung so auf den mit der ersten Zusammensetzung beschichteten Träger aufgetragen, dass es zu einer partiellen Durchmischung der Zusammensetzungen kommt. Bevorzugt weist die aus der ersten Zusammensetzung gebildete Schicht beim Auftragen der zweiten, trennwirksamen Zusammensetzung hierauf einen Feststoffgehalt von 80 bis 100 %, bevorzugt 85 bis 95%, noch bevorzugter 90 bis 95 % auf
Die Releaseschicht der erfindungsgemäßen Produkte weist bevorzugt eine mittlere Schichtdicke ds von 1,5 - 8 µm, besonders bevorzugt von 2 - 5 µm, ganz besonders bevorzugt von 2,5 - 3,5 µm auf. Unter mittlerer Schichtdicke ds wird hierbei eine gemäß Messmethode B ermittelte Schichtdicke verstanden.

In einer bevorzugten Ausführungsform der Erfindung ist die mittlere Schichtdicke ds der Releaseschicht kleiner als die durchschnittliche Partikelgröße der Silicagelpartikel. In einer besonders bevorzugten Ausgestaltung der Erfindung beträgt hierbei die durchschnittliche Partikelgröße der Silicagelpartikel 3 - 10 µm bei einer mittleren Schichtdicke ds von 1, 5 - 8 µm, besonders bevorzugt beträgt die durchschnittliche Partikelgröße 3,5 - 7 µm bei einer mittleren Schichtdicke ds von 2 - 5 µm, noch bevorzugter beträgt die durchschnittliche Partikelgröße 4 - 5 µm bei einer mittleren Schichtdicke ds von 2,5 - 3,5 µm. Eine derartige Ausgestaltung der Releaseschicht bedingt den Effekt, dass die erfindungsgemäßen haftklebrigen Produkte eine besonders universelle Beschriftbarkeit bei gleichzeitig optimiertem Abrollverhalten aufweisen.

Haftklebrige Produkte im Sinne der vorliegenden Erfindung umfassen Klebebänder und Etiketten sowie Blattware, die teilweise klebrig ausgerüstet ist. Bevorzugt ist das erfindungsgemäße Produkt ein Klebeband. In einer besonders bevorzugten Ausführungsform der Erfindung liegt das erfindungsgemäße Produkt in Form einer archimedischen Spirale vor. Die erfindungsgemäßen haftklebrigen Produkte zeichnen sich durch eine hervorragende universelle Beschriftbarkeit aus und besitzen ein optimales Trennverhalten, das auch bei hohen Abzugsgeschwindigkeit geräuscharm ist.

### Messmethoden

### Methode A - Bestimmung der Partikelgröße und der Partikelgrößenverteilung

### Partikelgröße

Zur Bestimmung ihrer durchschnittlichen Partikelgröße werden die Silicagelpartikel mithilfe eines Mastersizer 2000 der Firma Malvern untersucht. Hierzu werden die Partikel in deionisiertem Wasser suspendiert und gemäß den Vorgaben des Herstellers in der Bedienungsanleitung bei einer Verdunkelung ("obscuration") von 17 +/- 1% untersucht. Hierbei wird als durchschnittliche Partikelgröße der D(0.50)-Wert erhalten, der dem Maximum der Verteilungskurve von anteiligem Volumen [%] zu Partikelgröße [µm] entspricht.

### Partikelgrößen verteilung

Zur Bestimmung der Partikelgrößenverteilung werden Silicagelpartikel in deionisiertem Wasser suspendiert und mit einem Mastersizer 2000 der Firma Malvern gemäß den Vorgaben des Herstellers in der Bedienungsanleitung bei einer Verdunkelung ("obscuration") von 17 +/- 1% untersucht. Als Werte der Volumenverteilung werden D(0.05), D(0.10), D(0.50), D(0.90) sowie D(0.98) ermittelt, wobei die erhaltenen Werte in µm eine Aussage in % darüber darstellen, wie viele Partikel [angegeben in % Volumenanteil] eine Größe [angegeben in µm] nicht überschreiten. Ein beispielhafter Wert von 7,00 µm für D(0.98) bedeutet insofern, dass 98 % der Teilchen eine Größe von bis zu 7,00 µm aufweisen, diesen Wert also nicht überschreiten.

### Methode B - Bestimmung der mittleren Schichtdicke dₛ

Zur Bestimmung der mittleren Schichtdicke dₛ werden Proben erfindungsgemäßer haftklebriger Produkte mit Hilfe eines Mikrotoms der Firma Leica (Modell RM 2265) zu dünnen Schichten von 10 - 30 µm geschnitten und mittels eines Stereomikroskops der Firma Leica (Modell S8 APO) vermessen. Die Bestimmung von dₛ ergibt sich dabei nach vorhergehender Kalibrierung des Stereomikroskops an geeichten Standards mit Dicken von 1.0 und 5.0 µm, wobei eventuell aus der Releaseschicht herausragende Silicagelpartikel für die Bestimmung von dₛ vernachlässigt werden. Dies ist immer dann der Fall, wenn die mittlere Schichtdicke dₛ kleiner ist als die mittlere Partikelgröße der Silicagelpartikel.

### Beispiele

Eine beidseitig Corona-vorbehandelte BOPP-Folie mit einer Foliendicke von 32 µm, die optional einer ein- oder beidseitigen Primerbehandlung unterzogen wurde, wird mit 2,5 g/m² einer im folgenden beschriebenen ersten Zusammensetzung beschichtet und anschließend mit 0,5 g/m² einer zweiten, trennwirksamen Zusammensetzung.

Eine erste beispielhafte Zusammensetzung wird erhalten durch Mischen von 50,0 Gew.-% eines Bindemittels (BAYHYDROL UH 2593/1, BAYER MaterialScience), 28,0 Gew.-% Stärke (Remy FG, Beneo Palatinit GmbH), 17,2 Gew.-% Silicagelpartikel (SYLOID ED2, GRACE Davison) sowie 4,8 Gew.-% technisch nützlichen Additiven wie Verdickungsmittel, Emulgatoren und Schaumregulierungsmittel. Zum Auftragen auf den Träger wird die Zusammensetzung mit Wasser vermischt, so dass sich eine 15-%ige wässrige Dispersion ergibt. Die zweite Zusammensetzung umfasst als Trennmittel 94,1 Gew.-% eines Organopolysiloxan/Polyharnstoff/Polyurethan-Blockcopolymers (GENIOMER SEA 3070 der Firma Wacker-Chemie) und technisch nützliche Additive wie Verdickungsmittel, Vernetzer und Schaumregulierungsmittel; auch diese zweite Zusammensetzung wird mit Wasser vermischt, so dass eine 15-%ige wässrige Dispersion erhalten wird. Die erste und die zweite, trennwirksame Zusammensetzung wird jeweils in Form der erhaltenen wässrigen Dispersionen aufgetragen; die für die Zusammensetzung angegebenen Flächengewichte beziehen sich auf den Feststoffgehalt, d.h. die nach Trocknung der Dispersionen verbleibenden Flächengewichte. Auf der anderen Seite des Trägers werden 14 g/m² einer Polyacrylatklebmassendispersion (ACRONAL V 215, BASF SE), weiß pigmentiert mit 3,5 Gew.-% Titandioxid beschichtet.

Das so erhaltene haftklebrige Produkt wird zu Klebebändern geschnitten und zu archimedisch gewickelten Rollen aufgewickelt. Die Klebebänder sind leicht abrollbar, auch nach einer Lagerung bei erhöhter Temperatur und erhöhter Luftfeuchtigkeit sowie einer lang anhaltenden Lagerung über bis zu einem Jahr. Bei schnellem Abziehen resultiert nur eine geringfügige Geräuschbelästigung (low-noise). Das Produkt ist mit diversen Schreibutensilien (Bleistift, Kugelschreiber, Füller, Filzstift, Gelstift) unter Erhalt guter Beschriftungsbilder beschriftbar.

## Patentansprüche

1. Haftklebriges Produkt umfassend einen Träger mit einer auf der Vorderseite des Trägers angeordneten Haftklebmassenschicht und einer auf der Rückseite des Trägers angeordneten Releaseschicht, die Silicagelpartikel und Stärke sowie ein Bindemittel und optional weitere Additive umfasst, **dadurch gekennzeichnet, dass** die Silicagelpartikel eine als D(0.50)-Wert erhaltene durchschnittliche Partikelgröße, bestimmt durch das in der Beschreibung beschriebene Verfahren, von 3 - 10 µm aufweisen.

2. Haftklebriges Produkt gemäß Anspruch 1, **dadurch gekennzeichnet, dass** die Releaseschicht erhältlich ist durch das Auftragen einer ersten Zusammensetzung auf den Träger, wobei die erste Zusammensetzung Silicagelpartikel mit einer durchschnittlichen Partikelgröße von 3 - 10 µm und Stärke sowie ein Bindemittel und optional weitere Additive umfasst, und anschließendem Auftragen einer zweiten, trennwirksamen Zusammensetzung hierauf.

3. Haftklebriges Produkt gemäß Anspruch 2, **dadurch gekennzeichnet, dass** die erste und die zweite Zusammensetzung jeweils in Form einer wässrigen Dispersion vorliegen.

4. Haftklebriges Produkt gemäß einem der vorangehenden Ansprüche, **dadurch gekennzeichnet, dass** die mittlere Schichtdicke ds der Releaseschicht 1,5 - 8 µm beträgt.

5. Haftklebriges Produkt gemäß Anspruch 4, **dadurch gekennzeichnet, dass** die mittlere Schichtdicke d_{S} der Releaseschicht kleiner ist als die durchschnittliche Partikelgöße der Silicagelpartikel.

6. Haftklebriges Produkt gemäß einem der vorangehenden Ansprüche, **dadurch gekennzeichnet, dass** die Releaseschicht 3 - 30 Gew.-% Silicagelpartikel aufweist.

7. Haftklebriges Produkt gemäß einem der vorangehenden Ansprüche, **dadurch gekennzeichnet, dass** die Releaseschicht 5 - 50 Gew.-% Stärke aufweist.

8. Haftklebriges Produkt gemäß einem der vorangehenden Ansprüche, **dadurch gekennzeichnet, dass** die Releaseschicht 25 - 70 Gew.-% Bindemittel aufweist.

9. Haftklebriges Produkt gemäß einem der vorangehenden Ansprüche, **dadurch gekennzeichnet, dass** die Releaseschicht 10 - 20 Gew.-% Polymer auf Silikonbasis enthält.

10. Haftklebriges Produkt gemäß einem der vorangehenden Ansprüche, **dadurch gekennzeichnet, dass** die Releaseschicht bis zu 30 Gew.-% weiterer Additive enthält.

11. Haftklebriges Produkt gemäß einem der vorangehenden Ansprüche, **dadurch gekennzeichnet, dass** die weiteren Additive ausgewählt sind aus der Gruppe umfassend Verdickungsmittel, Vernetzungsmittel, Emulgatoren und Schaumregulierungsmittel.

12. Haftklebriges Produkt gemäß einem der vorangehenden Ansprüche, **dadurch gekennzeichnet, dass** das Produkt in Form einer archimedischen Spirale vorliegt.

## Claims

1. Adhesive product comprising a carrier having, disposed on the front side of the carrier, a layer of pressure-sensitive adhesive, and, disposed on the back side of the carrier, a release layer, comprising silica gel particles and starch and also a binder and optionally further additives, **characterized in that** the silica gel particles have an average particle size, obtained as D(0.50) value determined by the method described in the description, of 3-10 µm.

2. Adhesive product according to Claim 1, **characterized in that** the release layer is obtainable by applying a first composition to the carrier, the first composition comprising silica gel particles having an average particle size of 3-10 µm and starch and also a binder and optionally further additives, and subsequently applying a second composition possessing release activity.

3. Adhesive product according to Claim 2, **characterized in that** the first and second compositions are each present in the form of an aqueous dispersion.

4. Adhesive product according to any of the preceding claims, **characterized in that** the mean layer thickness ds of the release layer is 1.5-8 µm.

5. Adhesive product according to Claim 4, **characterized in that** the mean layer thickness ds of the release layer is lower than the average particle size of the silica gel particles.

6. Adhesive product according to any of the preceding claims, **characterized in that** the release layer contains 3-30 wt% of silica gel particles.

7. Adhesive product according to any of the preceding claims, **characterized in that** the release layer contains 5-50 wt% of starch.

8. Adhesive product according to any of the preceding claims, **characterized in that** the release layer contains 25-70 wt% of binder.

9. Adhesive product according to any of the preceding claims, **characterized in that** the release layer contains 10-20 wt% of silicone-based polymer.

10. Adhesive product according to any of the preceding claims, **characterized in that** the release layer contains up to 30 wt% of further additives.

11. Adhesive product according to any of the preceding claims, **characterized in that** the further additives are selected from the group encompassing thickeners, crosslinking agents, emulsifiers and foam regulators.

12. Adhesive product according to any of the preceding claims, **characterized in that** the product is present in the form of an Archimedean spiral.

## Revendications

1. Produit adhésif de contact comprenant un support qui comprend une couche de masse adhésive de contact agencée sur le côté avant du support et une couche antiadhésive agencée sur le côté arrière du support, qui comprend des particules de gel de silice et de l'amidon, ainsi qu'un liant et éventuellement d'autres additifs, **caractérisé en ce que** les particules de gel de silice présentent une taille de particule moyenne obtenue en tant que valeur D(0,50), déterminée par le procédé décrit dans la description, de 3 à 10 µm.

2. Produit adhésif de contact selon la revendication 1, **caractérisé en ce que** la couche antiadhésive peut être obtenue par l'application d'une première composition sur le support, la première composition comprenant des particules de gel de silice ayant une taille de particule moyenne de 3 à 10 µm et de l'amidon, ainsi qu'un liant et éventuellement d'autres additifs, puis l'application d'une deuxième composition à effet antiadhésif sur celle-ci.

3. Produit adhésif de contact selon la revendication 2, **caractérisé en ce que** la première et la deuxième composition se présentent chacune sous la forme d'une dispersion aqueuse.

4. Produit adhésif de contact selon l'une quelconque des revendications précédentes, **caractérisé en ce que** l'épaisseur de couche moyenne ds de la couche antiadhésive est de 1,5 à 8 µm.

5. Produit adhésif de contact selon la revendication 4, **caractérisé en ce que** l'épaisseur de couche moyenne ds de la couche antiadhésive est inférieure à la taille de particule moyenne des particules de gel de silice.

6. Produit adhésif de contact selon l'une quelconque des revendications précédentes, **caractérisé en ce que** la couche antiadhésive comprend 3 à 30 % en poids de particules de gel de silice.

7. Produit adhésif de contact selon l'une quelconque des revendications précédentes, **caractérisé en ce que** la couche antiadhésive comprend 5 à 50 % en poids d'amidon.

8. Produit adhésif de contact selon l'une quelconque des revendications précédentes, **caractérisé en ce que** la couche antiadhésive comprend 25 à 70 % en poids de liant.

9. Produit adhésif de contact selon l'une quelconque des revendications précédentes, **caractérisé en ce que** la couche antiadhésive contient 10 à 20 % en poids d'un polymère à base de silicone.

10. Produit adhésif de contact selon l'une quelconque des revendications précédentes, **caractérisé en ce que** la couche antiadhésive contient jusqu'à 30 % en poids d'autres additifs.

11. Produit adhésif de contact selon l'une quelconque des revendications précédentes, **caractérisé en ce que** les autres additifs sont choisis dans le groupe comprenant les épaississants, les agents de réticulation, les émulsifiants et les agents de régulation de mousse.

12. Produit adhésif de contact selon l'une quelconque des revendications précédentes, **caractérisé en ce que** le produit se présente sous la forme d'une spirale archimédique.
